# DEMANDE DE BREVET EUROPEEN

(11) **EP 4 746 437 A1**
(43) Date de publication de la demande: **20.05.2026**
(21) Numéro de dépôt: 25213188.3
(22) Date de dépôt: 04.11.2025
(51) Int. Cl.: H04N 25/59, H04N 25/616, H04N 25/771, H04N 25/78

(54) **PROCÉDÉ DE LECTURE D'UN PIXEL À DOUBLE GAIN DE CONVERSION CHARGE/TENSION ET SYSTÈME CORRESPONDANT**

(30) Priorité: 15.11.2024 FR 2412482
(71) Demandeur: STMicroelectronics International N.V., 1228 Plan-les-Ouates, Geneva (CH)
(72) Inventeur: TUBERT, Cedric, 38120 SAINT EGREVE (FR)
(74) Mandataire: Casalonga

(57) **Abrégé**

Lors de la conversion à faible gain, on génère une impulsion du signal de commande de mode (DCG) encadrant l'impulsion (TG2) déclenchant le transfert de charges.

Ceci permet de n'utiliser que trois rampes (RAMP1, RAMP2, RAMP3).

## Description

Des modes de réalisation et de mise en œuvre concernent le traitement de signaux analogiques, notamment le traitement des signaux analogiques délivrés par des pixels utilisant une méthode de lecture à double gain de conversion charge/tension connue par l'homme du métier sous l'acronyme anglosaxon DCG (« Dual conversion gain »).

Une lecture à double gain de conversion (DCG) comporte une lecture dite HCG (fort gain de conversion) et une lecture dite LCG (faible gain de conversion).

La lecture HCG permet d'avoir un faible bruit de lecture au détriment du signal maximal converti.

La lecture LCG a un plancher de bruit plus fort avec l'avantage de convertir un signal maximal utile plus grand.

Cette lecture DCG est la base des techniques de conversion dite à extension de dynamique :
- Extension de dynamique par le bas par minimisation du bruit (lecture HCG)
- Extension de la dynamique par le haut grâce à une lecture avec un gain plus faible (lecture LCG).

La taille des pixels dans les capteurs d'images utilisant la technologie CMOS tend à se réduire de plus en plus conduisant à une réduction de la pleine capacité du puits (FWC : « Full Well Capacity ») de chaque pixel, qui est directement liée à la plage dynamique (DR : « Dynamic Range ») intrinsèque du capteur.

Le marché actuel des capteurs d'images requiert des capteurs dont les pixels et les schémas de lecture correspondants soient compatibles avec une lecture à double conversion de gain (DCG).

Cependant cela implique des durées de lecture (conversion) longues avec un débit d'images réduit.

C'est le cas dans les procédés de lecture du type DCG décrits dans les documents US10431608B2 et US10356351B1 dans lesquels les durées de lecture avec double conversion de gain sont de l'ordre de 12 microsecondes.

Il existe donc un besoin d'avoir d'un procédé de lecture du type DCG avec une durée de lecture de chaque pixel réduite.

Selon un aspect il est proposé un procédé de lecture d'un pixel à double gain de conversion charge/tension (DCG).

Le pixel a une photodiode capable de stocker des charges et un nœud de lecture.

Le pixel peut être placé en réponse à un signal dit de commande de mode, soit dans un mode à fort gain de conversion (HCG) soit dans un mode à faible gain de conversion (LCG).

Le procédé comprend une opération de lecture comportant successivement :
- a) une réinitialisation du nœud de lecture du pixel placé dans son mode à faible gain de conversion, puis une première transition du signal de commande de mode de façon à placer le pixel dans son mode à fort gain de conversion (HCG), et, de préférence, postérieurement à la première transition (TRT1), une comparaison d'une première tension de sortie (VX) délivrée à un nœud de sortie (SN) relié au nœud de lecture avec un premier signal de rampe (RAMP1), et une détermination d'une première valeur numérique de comptage (REF) représentative d'une première durée entre le début du premier signal de rampe et un premier instant où ladite première tension de sortie croise le premier signal de rampe ;
- b) le pixel étant dans son mode à fort gain de conversion, un premier transfert de charges depuis la photodiode vers le nœud de lecture avec un fort gain de conversion, et, de préférence, postérieurement au premier transfert de charges (TG1), une comparaison d'une deuxième tension de sortie (VX) délivrée au nœud de sortie avec un deuxième signal de rampe (RAMP2), et une détermination d'une deuxième valeur numérique de comptage (SIG_{HCG}) représentative d'une deuxième durée entre le début du deuxième signal de rampe et un deuxième instant où ladite deuxième tension de sortie croise le deuxième signal de rampe ;
- c) une deuxième transition du signal de commande de façon à placer le pixel dans son mode à faible gain de conversion, suivie d'un deuxième transfert de charges depuis la photodiode vers le nœud de lecture avec un faible gain de conversion, suivie d'une troisième transition du signal de commande, opposée à la deuxième transition de façon à replacer le pixel dans son mode à fort gain de conversion, et, de préférence, postérieurement à la troisième transition (TRT3), une comparaison d'une troisième tension de sortie (VX) délivrée au nœud de sortie avec un troisième signal de rampe (RAMP3) et une détermination d'une troisième valeur numérique de comptage (SIG_{LCG}) représentative d'une troisième durée entre le début du troisième signal de rampe et un troisième instant où ladite troisième tension de sortie croise le troisième signal de rampe.

Le transfert de charges s'effectue en rendant passant, avec une impulsion de transfert, un transistor de transfert connecté entre la photodiode du pixel et le nœud de lecture.

Par ailleurs le pixel comporte généralement un premier condensateur ayant une première borne (reliée au nœud de lecture et à la photodiode par l'intermédiaire du transistor de transfert) et une deuxième borne connectée à la masse et un deuxième condensateur ayant une première borne et une deuxième borne connectée à la masse.

Les premières bornes de ces deux condensateurs sont connectées ensemble par l'intermédiaire d'un autre transistor, dit transistor de mode, commandé par le signal de commande.

Ce transistor de mode permet de définir de mode de conversion (fort gain ou faible gain) du pixel et est également connecté au transistor de transfert.

Le deuxième condensateur permet de stocker des charges qui auraient éventuellement débordées « par-dessus » le transistor de mode lors d'un transfert de charges.

Lors de la première transition ou de la troisième transition (fronts descendants par exemple) du signal de commande de mode, le transistor de mode est bloqué et seul le premier condensateur est relié à la photodiode du pixel par l'intermédiaire du transistor de transfert.

Le pixel est alors dans son mode à fort gain de conversion.

Lors de la deuxième transition (front montant par exemple) du signal de commande de mode, le transistor de mode est passant reliant alors les deux premières bornes des deux condensateurs ensemble et à la photodiode du pixel par l'intermédiaire du transistor de transfert.

Le pixel est alors dans son mode à faible gain de conversion.

La deuxième transition (front montant) du signal de commande (préalable à l'impulsion de transfert) suivie de la troisième transition (front descendant) du signal de commande (postérieure à l'impulsion de transfert) définissent une impulsion de commande (« aller et retour ») du signal de commande de mode encadrant l'impulsion de transfert.

Lors de la deuxième transition (front montant) du signal de commande de mode, il y a une injection positive de charges depuis le premier condensateur (relié au nœud de lecture) vers le deuxième condensateur.

Et cette injection positive de charges est compensée par une injection négative de charges depuis le deuxième condensateur vers le premier condensateur lors de la troisième transition (front descendant) du signal de commande de mode.

En d'autres termes l'impulsion complète du signal de commande de mode permet de compenser cette injection positive de charges grâce audit « aller et retour ».

Et ceci permet à la conversion mise en œuvre dans l'étape c), d'opérer dans les mêmes conditions que celles des conversions mises en œuvre dans les étapes a) et b).

On évite ainsi la mise en œuvre d'une quatrième conversion, nécessaire et décrite dans l'art antérieur mentionné ci-avant, ce qui permet de réduire la durée de conversion.

Le pixel comporte un nœud de sortie relié au nœud de lecture.

Selon un mode de mise en œuvre :
- l'étape a) comporte également, postérieurement à la première transition du signal de commande de mode, une comparaison d'une première tension de sortie délivrée au nœud de sortie avec un premier signal de rampe et une détermination d'une première valeur numérique de comptage représentative d'une première durée entre le début du premier signal de rampe et un premier instant où ladite première tension de sortie croise le premier signal de rampe,
- l'étape b) comporte également, postérieurement au premier transfert de charges, une comparaison d'une deuxième tension de sortie délivrée au nœud de sortie avec un deuxième signal de rampe et une détermination d'une deuxième valeur numérique de comptage représentative d'une deuxième durée entre le début du deuxième signal de rampe et un deuxième instant où ladite deuxième tension de sortie croise le deuxième signal de rampe, et
- l'étape c) comporte également, postérieurement à la troisième transition du signal de commande de mode, une comparaison d'une troisième tension de sortie délivrée au nœud de sortie avec un troisième signal de rampe et une détermination d'une troisième valeur numérique de comptage représentative d'une troisième durée entre le début du troisième signal de rampe et un troisième instant où ladite troisième tension de sortie croise le troisième signal de rampe.

Puisque, comme mentionné ci-avant, il n'est pas nécessaire d'effectuer une quatrième conversion, il n'est pas nécessaire ici d'utiliser un quatrième signal de rampe.

Selon un mode de réalisation, le procédé comporte, à la suite de l'opération de lecture, une délivrance d'une différence entre la deuxième valeur numérique de comptage et la première valeur numérique de comptage, et d'une différence entre la troisième valeur numérique de comptage et la première valeur numérique de comptage.

Selon un mode avantageux de mise en œuvre, le troisième signal de rampe débute à un niveau inférieur au niveau du début du deuxième signal de rampe.

En effet une partie des charges a déjà été converti lors de la conversion HCG et il est donc inutile de les convertir une deuxième fois lors de la conversion LCG.

Selon un autre aspect il est proposé un système, comprenant
- un pixel ayant une photodiode capable de stocker des charges, un nœud de lecture, le pixel pouvant être placé en réponse à un signal de commande de mode, soit dans un mode à fort gain de conversion soit dans un mode à faible gain de conversion,
- un dispositif de lecture du pixel à double gain de conversion charge/tension, comportant des moyens de traitement configurés pour délivrer ledit signal de commande de mode et mettre en œuvre une opération de lecture comportant successivement :
   a) une réinitialisation du nœud de lecture du pixel placé dans son mode à faible gain de conversion, puis une première transition du signal de commande de mode de façon à placer le pixel dans son mode à fort gain de conversion (HCG),
   b) le pixel étant dans son mode à fort gain de conversion, un premier transfert de charges depuis la photodiode vers le nœud de lecture avec un fort gain de conversion,
   c) une deuxième transition du signal de commande de mode, de façon à placer le pixel dans son mode à faible gain de conversion, suivie d'un deuxième transfert de charges depuis la photodiode vers le nœud de lecture avec un faible gain de conversion, suivie d'une troisième transition du signal de commande, opposée à la deuxième transition de façon à replacer le pixel dans son mode à fort gain de conversion.

Selon un mode de réalisation, le pixel comporte un nœud de sortie relié au nœud de lecture, et les moyens de traitement comportent un générateur de rampe apte à délivrer des signaux de rampe, des moyens de comparaison, des moyens d'élaboration et des moyens de commande.

Selon ce mode de réalisation,
- pour la mise en œuvre de l'étape a), les moyens de commande sont configurés pour faire délivrer, postérieurement à la première transition du signal de commande de mode, un premier signal de rampe par le générateur de rampe, les moyens de comparaison sont configurés pour effectuer une comparaison d'une première tension de sortie délivrée au nœud de sortie avec le premier signal de rampe et les moyens d'élaboration sont configurés pour déterminer une première valeur numérique de comptage représentative d'une première durée entre le début du premier signal de rampe et un premier instant où ladite première tension de sortie croise le premier signal de rampe,
- pour la mise en œuvre de l'étape b), les moyens de commande sont configurés pour faire délivrer, postérieurement au premier transfert de charges, un deuxième signal de rampe par le générateur de rampe, les moyens de comparaison sont configurés pour effectuer une comparaison d'une deuxième tension de sortie délivrée au nœud de sortie avec le deuxième signal de rampe et les moyens d'élaboration sont configurés pour déterminer une deuxième valeur numérique de comptage représentative d'une deuxième durée entre le début du deuxième signal de rampe et un deuxième instant où ladite deuxième tension de sortie croise le deuxième signal de rampe,
- pour la mise en œuvre de l'étape c), les moyens de commande sont configurés pour faire délivrer, postérieurement à la troisième transition du signal de commande de mode, un troisième signal de rampe par le générateur de rampe, les moyens de comparaison sont configurés pour effectuer une comparaison d'une troisième tension de sortie délivrée au nœud de sortie avec le troisième signal de rampe et les moyens d'élaboration sont configurés pour déterminer une troisième valeur numérique de comptage représentative d'une troisième durée entre le début du troisième signal de rampe et un troisième instant où ladite troisième tension de sortie croise le troisième signal de rampe.

Selon un mode de réalisation, le système comporte des moyens de calcul pour délivrer une différence entre la deuxième valeur numérique de comptage et la première valeur numérique de comptage, et une différence entre la troisième valeur numérique de comptage et la première valeur numérique de comptage.

Selon un mode de réalisation, le système comporte : un transistor dit de transfert, commandé par un signal de transfert, connecté entre la photodiode et le nœud de lecture ; un premier condensateur ayant une première borne reliée au nœud de lecture et une deuxième borne connectée à la masse ; un deuxième condensateur ayant une première borne et une deuxième borne connectée à la masse ; et un transistor dit de mode, commandé par le signal de commande de mode, connectant ensemble les premières bornes des condensateurs.

Selon un mode de réalisation, le système comporte : un transistor dit de réinitialisation, commandé par un signal de réinitialisation, connecté entre la première borne du deuxième transistor et le transistor de mode d'une part, et une tension d'alimentation d'autre part.

Selon un mode de réalisation, le générateur de rampe est configuré pour délivrer le troisième signal de rampe débutant à un niveau inférieur au niveau du début du deuxième signal de rampe.

Selon un autre aspect il est proposé un capteur, comportant une matrice de pixels organisée en lignes et colonnes, et comportant respectivement au pied de chaque colonne, un dispositif de lecture tel que défini ci-avant.

D'autres avantages et caractéristiques de l'invention apparaîtront à l'examen de la description détaillée de modes de mise en œuvre et de réalisation, nullement limitatifs, et des dessins annexés sur lesquels :
- [Fig.1],
- [Fig.2],
- [Fig.3],
- [Fig.4],
- [Fig.5],
- [Fig.6], et
- [Fig.7], illustrent des modes de mise en œuvre et de réalisation de l'invention.

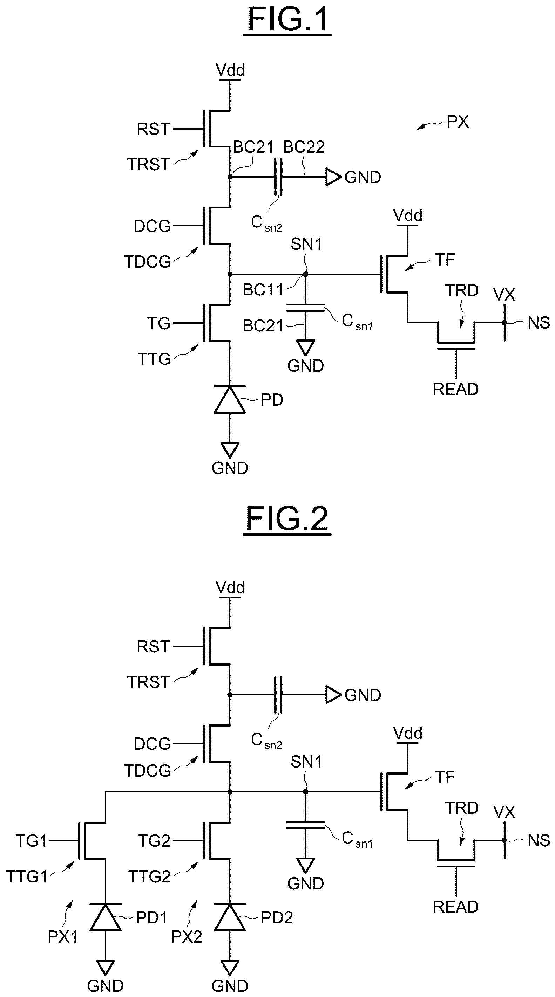

Sur la figure 1, la référence PX désigne un pixel.

Ce pixel comporte classiquement une photodiode PD intégrée dans un substrat de silicium, et associée à un transistor de transfert TTG, commandé par un signal de transfert TG.

Comme il est bien connu de l'homme du métier, lorsqu'une impulsion de transfert TG est appliquée sur la grille du transistor de transfert TTG, celui-ci devient passant, permettant un transfert des charges accumulées dans la photodiode vers le nœud de lecture SN1 du pixel.

Ce nœud de lecture SN1 est connecté à un nœud de sortie NS du pixel par l'intermédiaire d'un transistor suiveur TF et d'un transistor de lecture TRD commandé sur sa grille par un signal de commande de lecture READ.

Lors de l'opération de lecture, le signal de commande de lecture est à l'état haut, et le nœud de sortie délivre la tension de sortie VX.

Le pixel PX comporte également un premier condensateur Cₛₙ₁ possédant une première borne BC11 (correspondant au nœud de lecture SN1), connectée au transistor de transfert TG, et une deuxième borne BC12 connectée à la masse GND.

Ce premier condensateur est formé par des capacités parasites et des métallisations du circuit intégré.

Le pixel PX comporte également un deuxième condensateur Cₛₙ₂ possédant une première borne BC21 et une deuxième borne BC22 connectée à la masse GND.

Ce deuxième condensateur Cₛₙ₂ est également formé par des capacités parasites et des métallisations du circuit intégré.

Les deux premières bornes BC11 et BC21 de ces deux condensateurs sont connectées ensemble par l'intermédiaire d'un transistor dit de mode TDCG, commandé par un signal de commande de mode DCG.

Lorsque le transistor TDCG est bloqué (signal TDCG à l'état bas), seul le premier condensateur est relié au transistor de transfert TTG et le pixel est dans un mode de conversion à fort gain.

La lecture du pixel s'effectue donc avec une conversion charge/tension à fort gain (HCG) en présence d'une impulsion de transfert sur le signal TG.

Lorsque le transistor TDCG est passant (signal TDCG à l'état haut), les deux condensateurs sont reliés au transistor de transfert TG et au nœud de lecture SN1, et le pixel est dans un mode de conversion à faible gain.

La lecture du pixel s'effectue donc avec une conversion charge/tension à faible gain (LCG) en présence d'une impulsion de transfert sur le signal TG.

Le pixel PX comporte également un transistor de réinitialisation TRST, connecté entre la tension d'alimentation Vdd et le transistor de mode TDCG (et donc la première borne BC21 du deuxième condensateur Cₛₙ₂) et commandé par un signal de réinitialisation RST.

La figure 2 illustre deux pixels PX1 et PX2.

Le pixel PX1 possède sa photodiode PD1 associée au transistor de transfert TTG1 commandé par le signal de transfert TG1, et le pixel PX2 possède sa photodiode PD2 associée au transistor de transfert TTG2 commandé par le signal de transfert TG2.

Comme illustré sur cette figure 2, les deux pixels PX1 et PX2 partagent en commun le nœud de sortie NS, le nœud de lecture SN1 et les éléments TDCG, TRST, Csn1, Csn2, TF et TRD décrits en référence à la figure 1.

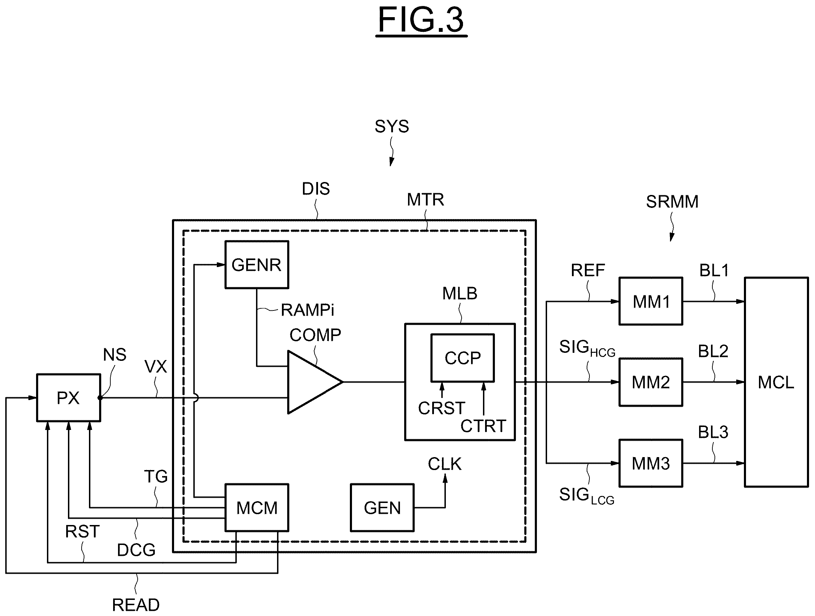

La figure 3 illustre schématiquement un système SYS selon un mode de réalisation de l'invention.

Ce système SYS comporte un pixel PX, par exemple du type de celui illustré sur la figure 1.

Bien entendu ce pixel pourrait être aussi l'un des pixels PX1, PX2 illustrés sur la figure 2.

Le système SYS comporte aussi un dispositif DIS de lecture du pixel à double gain de conversion charge/tension.

Ce dispositif de lecture comporte des moyens de traitement MTR configurés pour délivrer ledit signal de commande de mode DCG et, comme on le verra plus en détails ci-après, mettre en œuvre une opération de lecture comportant successivement :
a) une réinitialisation du nœud de lecture SN1 du pixel PX placé dans son mode à faible gain de conversion (LCG), puis une première transition du signal de commande de mode DCG de façon à placer le pixel dans son mode à fort gain de conversion HCG,
b) le pixel étant dans son mode à fort gain de conversion HCG, un premier transfert de charges depuis la photodiode vers le nœud de lecture avec un fort gain de conversion HCG,
c) une deuxième transition du signal de commande de mode DCG de façon à placer le pixel dans son mode à faible gain de conversion LCG, suivie d'un deuxième transfert de charges depuis la photodiode vers le nœud de lecture avec un faible gain de conversion LCG, suivie d'une troisième transition du signal de commande de mode DCG, opposée à la deuxième transition de façon à replacer le pixel dans son mode à fort gain de conversion HCG.

C'est dans l'étape c) que l'on effectue « l'aller et retour » du signal de commande de mode DCG.

Pour la mise en oeuvre de l'opération de lecture, les moyens de traitement MTR comportent :
- un générateur de rampe GENR configuré pour délivrer des signaux de rampe RAMPi,
- un comparateur COMP configuré pour comparer la tension de sortie VX du pixel avec le signal de rampe RAMPi,
- un générateur GEN configuré pour générer un signal d'horloge CLK,
- des moyens de commande MCM configurés pour commander le générateur de rampe et pour délivrer les différents signaux de commande TG, DCG, RST, READ,
- des moyens d'élaboration MLB configurés pour élaborer des mots numériques REF, SIG_{HCG}, SIG_{LCG} (dont on reviendra plus en détails ci-après sur la signification) résultant de l'opération de lecture du pixel, et comportant notamment un circuit comptage CCP cadencé à partir du signal d'horloge CLK et commandé par un signal de réinitialisation compteur CRST et un signal de transfert compteur CTRT.

Il est également prévu une mémoire, par exemple une mémoire SRAM, référencée SRMM, comportant des emplacements mémoires MM1, MM2, MM3 pour le stockage des mots numériques avant leur transfert vers des moyens de calcul MCL (par exemple incorporés au sein d'un microprocesseur) via des lignes de bits BL1, BL2, BL3 pour calculer d'autres valeurs numériques qui seront explicitées ci-après.

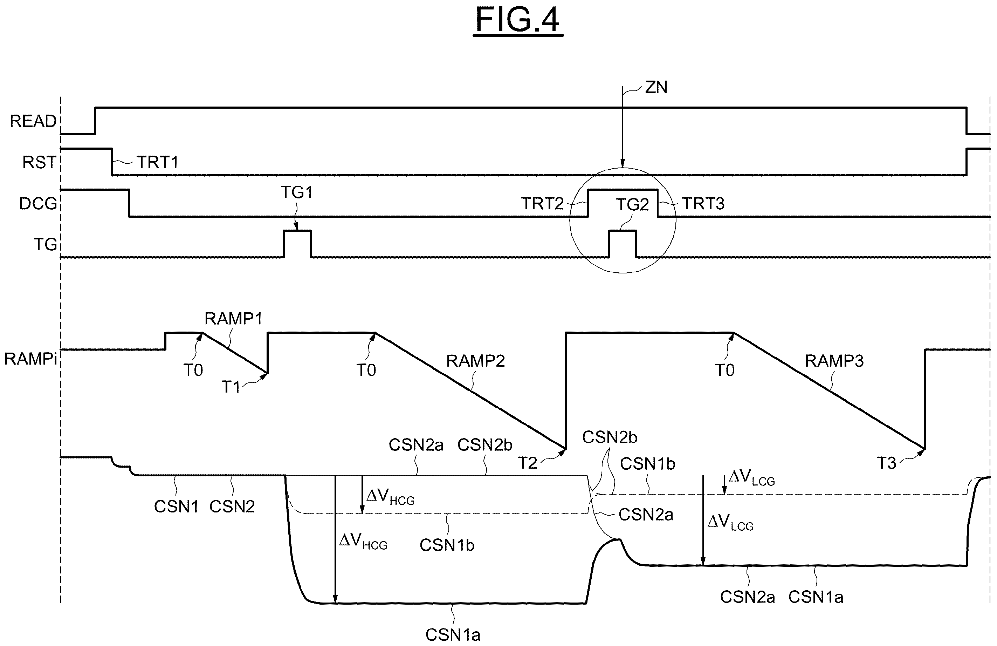

On se réfère maintenant plus particulièrement à la figure 4 pour décrire une opération courante de lecture du procédé de lecture du pixel PX.

L'opération de lecture comporte une réinitialisation du circuit de comptage CCP à l'aide du signal de réinitialisation compteur CRST.

L'opération de lecture comporte également une montée à l'état haut du signal de commande de lecture READ et débute par l'étape a) mentionnée ci-dessus.

Dans cette étape a), le signal de réinitialisation RST du pixel et le signal de commande mode DCG sont à l'état haut ce qui initialise à la tension d'alimentation Vdd, le nœud de lecture SN1 et la première borne BC21 du deuxième condensateur Cₛₙ₂.

Puis le signal RST redescend à l'état bas ce qui conduit à une injection de charges négatives sur le premier et le deuxième condensateurs.

Une première transition TRT1 est appliquée sur le signal DCG par les moyens de commande MCM de façon à placer le pixel dans son mode à fort gain de conversion HCG.

Les moyens de commande MCM activent le générateur de rampe GENR pour faire délivrer un premier signal de rampe RAMP1 par le générateur de rampe.

Les moyens de comparaison CMP effectuent une comparaison d'une première tension de sortie VX délivrée au nœud de sortie NS avec le premier signal de rampe RAMP1.

Les moyens d'élaboration MLB déterminent une première valeur numérique de comptage REF représentative d'une première durée entre le début T0 du premier signal de rampe RAMP1 et un premier instant T1(représenté schématiquement sur la figure 4) où ladite première tension de sortie croise le premier signal de rampe RAMP1.

Ceci est classique et bien connu de l'homme du métier.

Puis la valeur REF est transmise à l'emplacement mémoire MM1 à l'aide du signal de transfert compteur CTRT.

La première conversion est terminée et la valeur REF est une valeur de référence qui sera prise en compte pour les deux conversions HCG et LCG suivantes comme on le verra ci-après.

On procède à nouvelle réinitialisation du circuit de comptage CCP à l'aide du signal de réinitialisation compteur CRST.

Le pixel étant placé dans son mode à fort gain de conversion, on procède dans l'étape b), par une impulsion TG1 du signal de transfert TG, à un premier transfert de charges depuis la photodiode du pixel vers le nœud de lecture avec un fort gain de conversion HCG.

Les moyens de commande MCM activent le générateur de rampe GENR pour faire délivrer un deuxième signal de rampe RAMP2 par le générateur de rampe.

Les moyens de comparaison CMP effectuent une comparaison d'une deuxième tension de sortie VX délivrée au noeud de sortie NS avec le deuxième signal de rampe RAMP2.

Les moyens d'élaboration MLB déterminent une deuxième valeur numérique de comptage SIG_{HCG} représentative d'une deuxième durée entre le début T0 du deuxième signal de rampe RAMP2 et un deuxième instant T2(représenté schématiquement sur la figure 4) où ladite deuxième tension de sortie croise le deuxième signal de rampe RAMP2.

Puis la valeur SIG_{HCG} est transmise à l'emplacement mémoire MM2 à l'aide du signal de transfert compteur CTRT.

La deuxième conversion (conversion HCG) est terminée.

On procède à nouvelle réinitialisation du circuit de comptage CCP à l'aide du signal de réinitialisation compteur CRST.

Dans l'étape c), une deuxième transition TRT2 est appliquée au signal de commande de mode DCG de façon à placer le pixel dans son mode à faible gain de conversion LCG.

Il se produit alors un équilibre de charges entre les deux condensateurs et une injection de charges depuis le premier condensateur Cₛₙ₁ vers le deuxième condensateur Cₛₙ₂.

Puis on procède, par une impulsion TG2 du signal de transfert TG, à un deuxième transfert de charges depuis la photodiode vers le noeud de lecture SN1 du pixel avec un faible gain de conversion LCG.

Ceci permet de transférer les éventuelles charges encore présentes dans la photodiode après la conversion HCG.

Après ce deuxième transfert de charges, une troisième transition TRT3 du signal de commande de mode DCG est appliquée par les moyens de commande.

Cette troisième transition TRT3, opposée à la deuxième transition, permet de replacer le pixel dans son mode à fort gain de conversion HCG.

Comme illustré par le cercle ZN sur la figure 4, on a une impulsion (« aller et retour ») du signal DCG qui encadre l'impulsion TG2 du signal de transfert TG.

Et lors de la troisième transition TRT3, il se produit une injection de charges, identique mais opposée à celle qui s'est produite sur la deuxième transition TRT2.

A l'issue de cet aller et retour du signal DCG, le transistor de commande de mode TDCG n'aura produit aucune injection de charges résiduelle de nature à perturber la lecture du pixel.

De ce fait, la valeur de référence REF obtenue lors de la première conversion, et qui était valable pour la conversion HCG, reste valable pour la conversion LCG.

Une seule rampe sera donc utilisée pour cette conversion LCG et il n'est pas nécessaire d'en prévoir une quatrième, contrairement aux quatre rampes utilisées dans l'art antérieur cité ci-avant.

Il en résulte donc une durée de lecture réduite, typiquement une durée réduite de l'ordre de 30 à 35% par rapport à cet art antérieur qui utilise quatre rampes.

Comme il vient d'être précisé, les moyens de commande MCM activent le générateur de rampe GENR, postérieurement à la troisième transition TRT3 du signal DCG, pour faire délivrer un troisième signal de rampe RAMP3 par le générateur de rampe.

Les moyens de comparaison CMP effectuent une comparaison d'une troisième tension de sortie VX délivrée au noeud de sortie NS du pixel avec le troisième signal de rampe RAMP3.

Les moyens d'élaboration MLB déterminent une troisième valeur numérique de comptage SIG_{LCG} représentative d'une troisième durée entre le début T0 du troisième signal de rampe et un troisième instant T3 (représenté schématiquement sur la figure 4) où ladite troisième tension de sortie croise le troisième signal de rampe.

Puis la valeur SIG_{LCG} est transmise à l'emplacement mémoire MM3 à l'aide du signal de transfert compteur CTRT.

La troisième conversion (conversion LCG) ainsi que l'opération de lecture du pixel sont terminées.

Le signal de commande de lecture READ retombe à l'état bas et le pixel est réinitialisé (signal RST à l'état haut) pour l'opération de lecture suivante.

Sur la figure 4, la référence CSN1 désigne la courbe d'évolution de la tension au nœud de lecture SN1 du pixel lors de la réinitialisation du pixel et de la première conversion.

La référence CSN2 désigne la courbe d'évolution de la tension à la première borne BC21 du deuxième condensateur Cₛₙ₂ lors de la réinitialisation du pixel et de la première conversion.

La référence CSN1a désigne la courbe d'évolution de la tension au nœud de lecture SN1 du pixel lors des deux conversions suivantes HCG et LCG dans le cas où il subsiste des charges dans la photodiode après le premier transfert de charges (saturation du dispositif de lecture).

La référence CSN2a désigne la courbe d'évolution de la tension à la première borne BC21 du deuxième condensateur Cₛₙ₂ lors des deux conversions suivantes HCG et LCG dans le cas où il subsiste des charges dans la photodiode après le premier transfert de charges (saturation du dispositif de lecture).

La référence CSN1b désigne la courbe d'évolution de la tension au nœud de lecture SN1 du pixel lors des deux conversions suivantes HCG et LCG dans le cas où il ne subsiste pas de charges dans la photodiode après le premier transfert de charges (pas de saturation du dispositif de lecture).

La référence CSN2b désigne la courbe d'évolution de la tension à la première borne BC21 du deuxième condensateur Cₛₙ₂ lors des deux conversions suivantes HCG et LCG dans le cas où il ne subsiste pas de charges dans la photodiode après le premier transfert de charges (pas de saturation du dispositif de lecture).

ΔV_{HCG} et ΔV_{LCG} désignent les écarts de tension lors des deux conversions respectives HCG et LCG entre le niveau des courbes CSN1, CSN2 et le niveau des courbes CSN1a, CSN1b et le niveau des courbes CSN2a, CSN2b, respectivement.

Le système SYS comporte des moyens de calcul configurés pour délivrer une différence (SIG_{HCG}-REF) entre la deuxième valeur numérique de comptage (SIG_{HCG}) et la première valeur numérique de comptage (REF), et une différence (SIG_{LCG}-REF) entre la troisième valeur numérique de comptage (SIG_{LCG}) et la première valeur numérique de comptage (REF).

A l'issue de l'opération de lecture, les valeurs REF, SIG_{HCG}, SIG_{LCG} sont respectivement transmises sur les lignes de bits BL1, BL2, BL3 aux moyens de calcul MCL pour calculer les différences (SIG_{HCG}-REF) et (SIG_{LCG}-REF) à partir desquelles est calculée de façon classique et connue, la valeur du pixel avec extension de la dynamique.

En variante, en utilisant un additionneur 1 bit, il serait possible de délivrer aux emplacements mémoire directement les différences (SIG_{HCG}-REF) et (SIG_{LCG}-REF) afin que ces différences soient délivrées sur deux lignes de bits aux moyens de calcul MCL pour le calcul de la valeur de la plage dynamique du pixel.

Ceci permet de n'avoir qu'un bus deux fils et donc un gain de place.

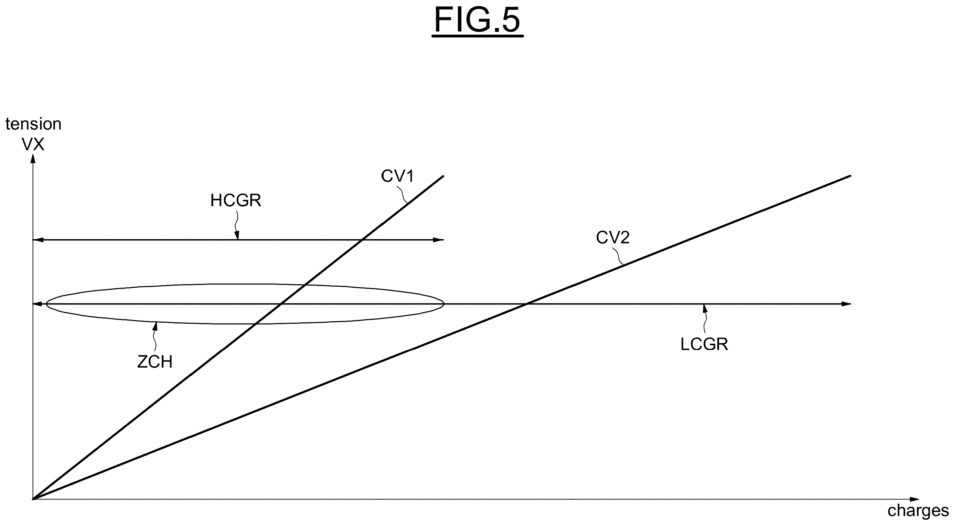

Sur la figure 5 la référence CV1 désigne la courbe d'évolution tension/charges lors de la conversion HCG (zone HCGR) et la référence CV2 désigne la courbe d'évolution tension/charges lors de la conversion LCG (zone LCGR).

On remarque qu'il y a une zone de chevauchement ZCH.

Il est donc préférable de ne pas convertir deux fois cette zone.

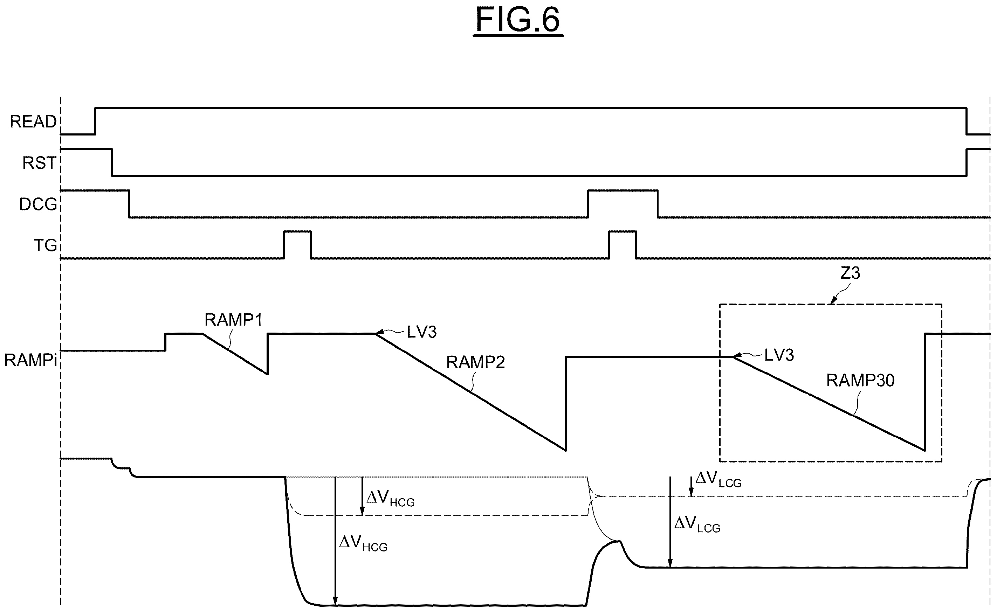

C'est la raison pour laquelle on peut utiliser en œuvre le mode de mise en œuvre illustré schématiquement sur la figure 6.

La figure 6 est identique à la figure 4 à l'exception de la zone Z3. A des fins de simplification certaines références de la figure 4 ne sont pas reprises sur la figure 6.

On ne décrira maintenant que la zone Z3.

Cette zone Z3 montre que le troisième signal de rampe RAMP30, utilisé pour la conversion LCG dans ce mode de mise en œuvre, débute à un niveau LV3 inférieur au niveau LV2 auquel débutent les premier RAMP1 et deuxième RAMP2 signaux de rampe.

Ceci permet de ne pas convertir deux fois la zone de chevauchement ZCH illustrée sur la figure 5.

De ce fait alors que l'opération de lecture s'effectue avec une rampe courte RAMP1et deux rampes longues RAMP2, RAMP3 dans le mode de mise en œuvre de la figure 4, elle s'effectue avec une rampe courte RAMP1, une rampe longue RAMP2 et une rampe moyenne RAMP30 dans le mode de mise en œuvre de la figure 6, conduisant à une réduction encore plus grande de la durée de l'opération de lecture.

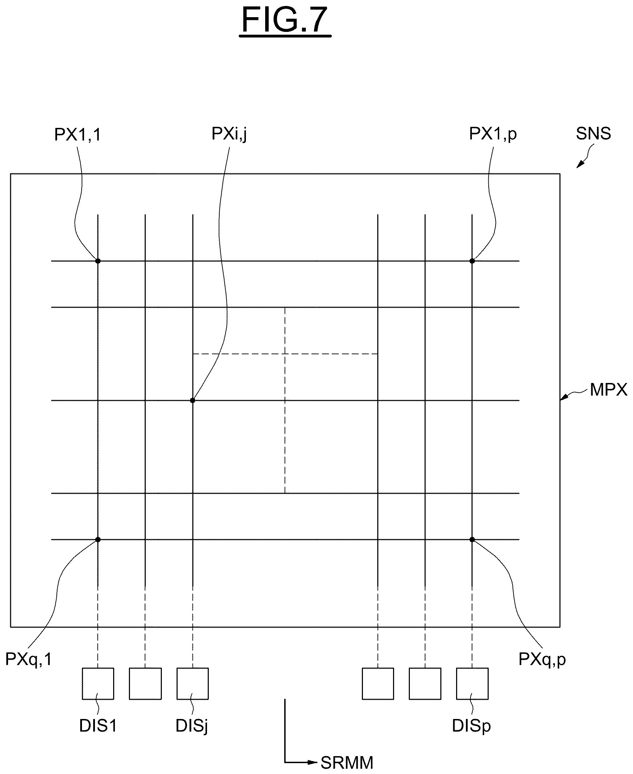

La figure 7 illustre schématiquement un capteur SNS comportant une matrice MPX de pixels PXi,j ayant ici q lignes et p colonnes.

Les pixels d'une ligne sont lus simultanément en utilisant le procédé qui vient d'être décrit.

Puis on passe à la ligne suivante jusqu'à lire toute la matrice.

En conséquence le capteur SNS comporte respectivement au pied des p colonnes, p dispositifs de lecture DIS1-DISSp, identiques au DIS décrit précédemment, et connectés à la mémoire SRMM.

## Revendications

1. Procédé de lecture d'un pixel à double gain de conversion charge/tension, le pixel ayant une photodiode capable de stocker des charges, un nœud de lecture (SN1), le pixel pouvant être placé en réponse à un signal de commande de mode (DCG) soit dans un mode à fort gain de conversion (HCG) soit dans un mode à faible gain de conversion (LCG), le procédé comprenant une opération de lecture comportant successivement :
- a) une réinitialisation du nœud de lecture (SN1) du pixel placé dans son mode à faible gain de conversion (LCG), puis une première transition (TRT1) du signal de commande (DCG) de mode de façon à placer le pixel dans son mode à fort gain de conversion (HCG),
- b) le pixel étant dans son mode à fort gain de conversion (HCG), un premier transfert de charges (TG1) depuis la photodiode vers le nœud de lecture avec un fort gain de conversion (HCG),
- c) une deuxième transition (TRT2) du signal de commande de mode (DCG) façon à placer le pixel dans son mode à faible gain de conversion (LCG), suivie d'un deuxième transfert de charges (TG2) depuis la photodiode vers le nœud de lecture (SN1) avec un faible gain de conversion (LCG), suivie d'une troisième transition (TRT3) du signal de commande de mode (DCG) , opposée à la deuxième transition (TRT2) de façon à replacer le pixel dans son mode à fort gain de conversion (HCG).

2. Procédé selon la revendication 1, dans lequel le pixel comporte un nœud de sortie (NS) relié au nœud de lecture (SN1),
- l'étape a) comporte également, postérieurement à la première transition (TRT1) du signal de commande de mode, une comparaison d'une première tension de sortie (VX) délivrée au nœud de sortie avec un premier signal de rampe (RAMP1) et une détermination d'une première valeur numérique de comptage (REF) représentative d'une première durée entre le début du premier signal de rampe et un premier instant où ladite première tension de sortie croise le premier signal de rampe,
- l'étape b) comporte également, postérieurement au premier transfert de charges (TG1), une comparaison d'une deuxième tension de sortie (VX) délivrée au nœud de sortie avec un deuxième signal de rampe (RAMP2) et une détermination d'une deuxième valeur numérique de comptage (SIG_{HCG})représentative d'une deuxième durée entre le début du deuxième signal de rampe et un deuxième instant où ladite deuxième tension de sortie croise le deuxième signal de rampe, et
- l'étape c) comporte également, postérieurement à la troisième transition (TRT3) du signal de commande de mode, une comparaison d'une troisième tension de sortie (VX) délivrée au nœud de sortie avec un troisième signal de rampe (RAMP3) et une détermination d'une troisième valeur numérique de comptage (SIG_{LCG}) représentative d'une troisième durée entre le début du troisième signal de rampe et un troisième instant où ladite troisième tension de sortie croise le troisième signal de rampe.

3. Procédé selon la revendication 2, comportant, à la suite de l'opération de lecture, une délivrance d'une différence (SIG_{HCG} - REF) entre la deuxième valeur numérique de comptage (SIG_{HCG}) et la première valeur numérique de comptage (REF), et d'une différence (SIG_{LCG} - REF) entre la troisième valeur numérique de comptage (SIG_{LCG}) et la première valeur numérique de comptage (REF).

4. Procédé selon la revendication 2 ou 3, dans lequel le troisième signal de rampe (RAMP3) débute à un niveau inférieur au niveau du début du deuxième signal de rampe (RAMP2).

5. Système, comprenant
- un pixel (PX) ayant une photodiode capable de stocker des charges, un nœud de lecture, le pixel pouvant être placé en réponse à un signal de commande soit dans un mode à fort gain de conversion soit dans un mode à faible gain de conversion,
- un dispositif (DIS) de lecture du pixel à double gain de conversion charge/tension, comportant des moyens de traitement (MTR) configurés pour délivrer ledit signal de commande et mettre en œuvre une opération de lecture comportant successivement :
- a) une réinitialisation du nœud de lecture du pixel placé dans son mode à faible gain de conversion, puis une première transition du signal de commande de mode (DCG) de façon à placer le pixel dans son mode à fort gain de conversion,
- b) le pixel étant dans son mode à fort gain de conversion, un premier transfert de charges depuis la photodiode vers le nœud de lecture avec un fort gain de conversion,
- c) une deuxième transition du signal de commande de façon à placer le pixel dans son mode à faible gain de conversion, suivie d'un deuxième transfert de charges depuis la photodiode vers le nœud de lecture avec un faible gain de conversion, suivie d'une troisième transition du signal de commande, opposée à la deuxième transition de façon à replacer le pixel dans son mode à fort gain de conversion.

6. Système selon la revendication 5, dans lequel
- le pixel comporte un nœud de sortie relié au nœud de lecture,
- les moyens de traitement (MTR) comportent un générateur de rampe (GENR) apte à délivrer des signaux de rampe, des moyens de comparaison (COMP), des moyens d'élaboration (MLB) et des moyens de commande (MCM), et
- pour la mise en œuvre de l'étape a), les moyens de commande sont configurés pour faire délivrer, postérieurement à la premier transition du signal de commande de mode, un premier signal de rampe par le générateur de rampe, les moyens de comparaison sont configurés pour effectuer une comparaison d'une première tension de sortie délivrée au nœud de sortie avec le premier signal de rampe et les moyens d'élaboration sont configurés pour déterminer une première valeur numérique de comptage représentative d'une première durée entre le début du premier signal de rampe et un premier instant où ladite première tension de sortie croise le premier signal de rampe,
- pour la mise en œuvre de l'étape b), les moyens de commande sont configurés pour faire délivrer, postérieurement au premier transfert de charges, un deuxième signal de rampe par le générateur de rampe, les moyens de comparaison sont configurés pour effectuer une comparaison d'une deuxième tension de sortie délivrée au nœud de sortie avec le deuxième signal de rampe et les moyens d'élaboration sont configurés pour déterminer une deuxième valeur numérique de comptage représentative d'une deuxième durée entre le début du deuxième signal de rampe et un deuxième instant où ladite deuxième tension de sortie croise le deuxième signal de rampe,
- pour la mise en œuvre de l'étape c), les moyens de commande sont configurés pour faire délivrer, postérieurement à la troisième transition du signal de commande de mode, un troisième signal de rampe par le générateur de rampe, les moyens de comparaison sont configurés pour effectuer une comparaison d'une troisième tension de sortie délivrée au nœud de sortie avec le troisième signal de rampe et les moyens d'élaboration sont configurés pour déterminer une troisième valeur numérique de comptage représentative d'une troisième durée entre le début du troisième signal de rampe et un troisième instant où ladite troisième tension de sortie croise le troisième signal de rampe.

7. Système selon la revendication 6, comportant des moyens de calcul pour délivrer une différence (SIG_{HCG} - REF) entre la deuxième valeur numérique de comptage (SIG_{HCG}) et la première valeur numérique de comptage (REF), et une différence (SIG_{LCG} - REF) entre la troisième valeur numérique de comptage (SIG_{LCG}) et la première valeur numérique de comptage (REF).

8. Système selon l'une quelconque des revendications 5 à 7, comportant en outre :
- un transistor dit de transfert (TTG), commandé par un signal de transfert (TG), connecté entre la photodiode (PD) et le nœud de lecture (SN1) ;
- un premier condensateur (Cₛₙ₁) ayant une première borne (BC11) reliée au nœud de lecture (SN1) et une deuxième borne (BC21) connectée à la masse ;
- un deuxième condensateur (Cₛₙ₂) ayant une première borne (BC21) et une deuxième borne (BC22) connectée à la masse ;
- un transistor dit de mode (TDCG), commandé par le signal de commande de mode (DCG), connectant ensemble les premières bornes (BC11, BC21) des condensateurs (Cₛₙ₁, Cₛₙ₂).

9. Système selon la revendication 8, comportant en outre un transistor dit de réinitialisation (TRST), commandé par un signal de réinitialisation (RST), connecté entre la première borne (BC21) du deuxième transistor (Cₛₙ₂) et le transistor de mode (TDCG) d'une part, et une tension d'alimentation (Vdd) d'autre part.

10. Système selon l'une quelconque des revendications 5 à 9, dans lequel le générateur de rampe (GENR) est configuré pour délivrer le troisième signal de rampe débutant à un niveau inférieur au niveau du début du deuxième signal de rampe.

11. Capteur, comportant une matrice de pixels (MPX) organisée en lignes et colonnes, et comportant respectivement au pied de chaque colonne, un dispositif de lecture (DISj) selon l'une des revendications 5 à 10.
